# EUROPÄISCHE PATENTSCHRIFT

(11) **EP 2 663 848 B1**
(45) Veröffentlichungstag und Bekanntmachung des Hinweises auf die Patenterteilung: **20.07.2016**
(21) Anmeldenummer: 12700332.5
(22) Anmeldetag: 12.01.2012
(51) Int. Cl.: G01L 3/10, F16C 33/20, F16C 17/12

(54) **LAGERANORDNUNG FÜR DREHMOMENTSENSOR MIT ABSTÜTZENDER FÜHRUNG DES STATORS UND DREHMOMENTSENSOR**
BEARING ARRANGEMENT FOR TORQUE SENSORS HAVING SUPPORTING GUIDANCE OF THE STATOR, AND TORQUE SENSOR
ENSEMBLE PALIER POUR DÉTECTEUR DE COUPLE PRÉSENTANT UN GUIDAGE SUPPORT DU STATOR, ET DÉTECTEUR DE COUPLE CORRESPONDANT

(30) Priorität: 12.01.2011 DE 102011002602
(43) Veröffentlichungstag der Anmeldung: 20.11.2013
(73) Patentinhaber: Continental Teves AG & Co. oHG, 60488 Frankfurt (DE)
(72) Erfinder: GOLL, Manfred, 63695 Glauburg 2 (DE); KROHN, Thomas, 65824 Schwalbach (DE); MÜLLER, Hilmar, 35452 Heuchelheim (DE)
(86) Internationale Anmeldenummer: PCT/EP2012/050461
(87) Internationale Veröffentlichungsnummer: WO 2012/095502

(56) Entgegenhaltungen:
- DE-A1-102004 023 801
- DE-A1-102007 059 364
- US-A1- 2003 081 870

## Beschreibung

Die Erfindung bezieht sich auf eine Lageranordnung gemäß Oberbegriff von Anspruch 1 sowie einen Drehmomentsensor mit einer solchen Lageranordnung.

In US 2003/081870 A1 wird eine Lageranordnung beschrieben, die zwei relativ zueinander bewegliche Lagerteile umfasst. Dabei wird das eine Lagerteil auf einer Lauffläche des anderen geführt, welche eine Vertiefung mit einem Grat aufweist.

Die Erfindung hat sich die Aufgabe gestellt, eine Lageranordnung mit zumindest einer ersten Lauffläche des zweiten Lagerteils vorzuschlagen, bei dem ein herstellungsbedingt entstehender Grat die Relativbewegung zwischen erstem und zweitem Lagerteil nicht oder nicht wesentlich beeinflusst.

Diese Aufgabe wird erfindungsgemäß gelöst durch die Lageranordnung gemäß Anspruch 1.

Der Grat ist vorzugsweise ein Trenngrat oder Spritzgrat oder Formteilungsgrat und entsteht insbesondere bei der Herstellung des zweiten Lagerteils an der wenigstens einen Werkzeugtrennebene bezogen auf das Spritzgusswerkzeug.

Die Lageranordnung ist bevorzugt so ausgebildet, dass ein gleichlaufender, reibungsarmer, geräuscharmer Betrieb der Lageranordnung ermöglicht wird, obwohl zumindest die erste Lauffläche wenigstens einen Grat aufweist. Solch ein Betrieb ist beispielsweise in einer Kfz- Lenkung gefordert, insbesondere bei der kontinuierlichen und präzisen Messwertermittlung des Drehmoment-Rohsignals in einer Drehmomentsensoranordnung.

Das erste Lagerteil weist vorzugsweise ein abstützendes Element auf, das wenigstens von der ersten Lauffläche des zweiten Lagerteils immer nur in einem Laufflächensegment geführt wird. Dieses Läufflächensegment ist insbesondere als Segment bezüglich der Länge und/oder des Umfangs der jeweiligen Lauffläche bemessen.

Zweckmäßigerweise umfasst das erste Lagerteil mit seinem abstützenden Element die erste und/oder zweite Lauffläche des zweiten Lagerteils nicht vollständig.

Es ist zweckmäßig, dass die Tiefe der Ausnehmung bzw. der Abflachung zur Oberfläche der jeweiligen Lauffläche bzw. bei einer Abflachung bezüglich des theoretischen Verlaufs, beispielsweise einer Mantelfläche, von der die Abflachung in zurückgesetzter Weise abweicht, mindestens so groß oder großer ist, wie die Höhe des in dieser Ausnehmung angeordneten Grats, von dessen Wurzel bis zur Spitze, damit das abstützende Element bzw. die Klammer den Grat nicht berührt, beim Abfahren der entsprechenden Lauffläche.

Die Lageranordnung ist vorzugsweise als Radiallager ausgebildet, wobei die Relativbewegung zwischen erstem und zweitem Lagerteil eine rotatorische Relativbewegung ist.

Die wenigstens eine Ausnehmung der ersten und/oder zweiten Lauffläche ist bevorzugt als Abflachung einer Zylindermantelfläche ausgebildet oder alternativ vorzugsweise als tiefer ausgebildete Ausnehmung auf einer Zylindermantelfläche.

Unter dem Begriff Ausnehmung wird vorzugsweise eine Aussparung verstanden, die in einem Guss-/ bzw. Spritzgussverfahren ausgebildet wird.

Wenigstens eine oder mehrere oder sämtliche der Ausnehmungen sind bevorzugt so ausgebildet, dass bezüglich des Querschnitts des zweiten Lagerteils die erste und/oder zweite Lauffläche entlang eines Kreisbogens verläuft und die Ausnehmung/en entlang einer Sehne des Kreisbogens verlaufen, insbesondere als Aussparungen bzw. Abflachungen auf einer Zylindermantelfläche.

Es ist bevorzugt, dass die erste Lauffläche und insbesondere die zweite Lauffläche als Mantelflächen eines rotationssymmetrischen Körpers ausgebildet sind. Wobei die erste Lauffläche insbesondere als Mantelflächen eines Zylinders ausgebildet ist.

Es ist zweckmäßig, dass die zweite Lauffläche ebenfalls wenigstens einen Grat aufweist und deshalb im Bereich dieses Grats ebenfalls eine Ausnehmung aufweist.

Die erste und/oder zweite Lauffläche des zweiten Lagerteils umfasst zweckmäßigerweise zwei oder drei oder mehr Grate, insbesondere Spritzgrate, welche in gleichmäßigen Abständen auf der Lauffläche in einer Ausnehmung angeordnet sind.

Es ist bevorzugt, dass das zweite Lagerteil entlang der ersten Lauffläche zumindest eine zusätzliche zweite Lauffläche aufweist, wobei diese beiden Laufflächen insbesondere nicht parallel zueinander angeordnet sind und wobei das erste Lagerteil durch die erste und die zusätzliche zweite Lauffläche geführt wird und durch diese beiden Laufflächen in unterschiedliche Richtungen abgestützt wird.

Besonders bevorzugt weist das zweite Lagerteil entlang der ersten und zweiten Lauffläche eine dritte Lauffläche auf, welche jeweils zueinander im Wesentlichen parallel verlaufen und welche das erste Lagerteil am zweiten Lagerteil jeweils in einer Richtung, also in diesem Fall in drei Richtungen, abstützen. Ganz besonders bevorzugt ist die erste Lauffläche als Bodenbahn einer um das zweite Lagerteil umlaufenden Nut ausgebildet und die zweite und dritte Lauffläche bilden jeweils eine Seitenwand dieser Nut. Dabei ist das abstützende Element des ersten Lagerteils zweckmäßigerweise so ausgebildet, dass es in diese Nut eingepresst ist und somit mit einer definierten Kraft alle drei Laufflächen abfährt, im Zuge einer Relativbewegung zwischen erstem und zweitem Lagerteil. Es ist dabei bevorzugt, dass das abstützende Element bzw. die Klammer in Richtung zwischen zweiter und dritter Lauffläche federnd ausgebildet ist, so dass sie insbesondere in die Nut eingebracht werden kann und sich sowohl an der zweiten, als auch an der dritten Lauffläche abstützen kann.

Es ist bevorzugt, dass das abstützende Element des ersten Lagerteils mit wenigstens einer Abtastfläche, besonders bevorzugt mit zwei oder drei Abtastflächen, wenigstens die erste Lauffläche abfährt und dabei so ausgebildet ist, dass die Länge der Abtastfläche entlang der Richtung der ersten Lauffläche größer ist, als die Länge der Ausnehmung der ersten Lauffläche entlang derselben Richtung, insbesondere dass die Länge der Abtastfläche mehr als 50% länger ist, besonders bevorzugt mindestens doppelt so lang ist, als die Länge der Ausnehmung jeweils entlang der Richtung der ersten Lauffläche, so dass das abstützende Element des ersten Lagerteils beim Abfahren entlang der ersten Lauffläche nicht in deren Ausnehmung eintaucht.

Das zweite Lagerteil ist vorzugsweise als spritzgegossenes Kunststoffteil oder aus Metallguss ausgebildet und zumindest entlang der ersten Lauffläche einstückig ausgebildet ist.

Es ist bevorzugt, dass das abstützende Element des ersten Lagerteils als Klammer ausgebildet ist und das zweite Lagerteil wenigstens im Bereich der ersten Lauffläche teilweise umgreift. Insbesondere ist das abstützende Element als Klammer mit zwei Armen bzw. zwei abragenden Armen ausgebildet und/oder mehrteilige Klammer ausgebildet, und weist zwei oder mehr Abtastflächen auf, mit welchen die Klammer hinsichtlich der Relativbewegung zwischen erstem und zweitem Lagerteil auf der wenigstens einen Lauffläche geführt und abgestützt wird.

Es ist zweckmäßig, dass die Lageranordnung als Teil eines Drehmomentsensors ausgebildet ist, wobei das zweite Lagerteil als Stator ausgebildet ist und das erste Lagerteil als Kollektor ausgebildet ist.

Es ist bevorzugt, dass der Drehmomentsensor eine Welle mit zwei Wellenabschnitten, einen magnetischen Encoder und den Stator als zweites Lagerteil der Lageranordnung umfasst, wobei der erste und der zweite Wellenabschnitt durch einen Torsionsstab miteinander verbunden sind und das Drehmoment erfasst werden soll, welches an zumindest einen dieser Wellenabschnitte angreift, wobei auf dem ersten Wellenabschnitt der magnetische Encoder angeordnet ist und auf dem zweiten Wellenabschnitt der Stator, der dem Encoder zugeordnet ist und diesen zumindest teilweise, berührungslos umschließt und das vom magnetischen Encoder erzeugte Magnetfeld moduliert, wobei das vom Stator modulierte Magnetfeld vom Kollektor als erstem Lagerteil der Lageranordnung erfasst und zu wenigstens einen Magnetfeldsensorelement geleitet wird. Besonders bevorzugt umfasst der Stator zwei Statorsegmente aus magnetisch leitfähigem Material, wobei die Statorsegmente insbesondere jeweils bezüglich des Torsionsstabs axial abragende Finger ausweisen, die abwechselnd ineinandergreifen und das Magnetfeld modulieren und jeweils pro Statorsegment an einem Ring befestigt sind.

Es ist bevorzugt, dass die beiden Statorsegmente gemeinsam mit Kunststoff umspritzt sind oder in einem gemeinsamen Kunststoffträger angeordnet sind, wobei diese Umspritzung oder dieser gemeinsame Kunststoffträger auf ihrem/seinem Außengehäuse die erste Lauffläche und insbesondere zusätzlich die zweite Lauffläche aufweist.

Es ist zweckmäßig, dass der Kollektor oder die gemeinsame Umspritzung des Kollektors und eines Sensormoduls eine Klammer umfasst/umfassen, welche so ausgebildet ist, dass sie zur formschlüssigen Positionierung und/oder Fixierung am Außenumfang der ersten und/oder zweiten Lauffläche des Stators ausgebildet ist und dafür mindestens zwei abragende Arme umfasst.

Bevorzugt ist der Stator, insbesondere wenigstens dessen erste Lauffläche aus Kunststoff ausgebildet. Besonders bevorzugt ist die Klammer ebenfalls aus Kunststoff ausgebildet.

Die Klammer ist vorzugsweise Teil eines Kollektors.

Der Stator wird bevorzugt auch als Statormodul bezeichnet.

Der Stator und der Kollektor umfassen bevorzugt magnetische leitfähige Elemente bzw. Bleche.

Der Kollektor wird bevorzugt auch als Kollektormodul bezeichnet.

Der Kollektor umfasst vorzugsweise zwei Kollektorsegmente, welche jeweils ein Kreissegment und ein gebogenes Konzentratorelement umfassen, wobei die beiden Konzentratorelemente so ausgebildet und angeordnet sind, dass sie zumindest einen gemeinsamen Luftspalt zwischen einander ausbilden, in welchem wenigstens eine Ausnehmung angeordnet ist, zur Aufnahme wenigstens eines Magnetfeldsensorelements. Die beiden Konzentratorelemente des Kollektormoduls sind insbesondere zumindest teilweise umspritzt, wobei in dem Kunststoffgehäuse dieser gemeinsamen Umspritzung die wenigstens eine Ausnehmung im Luftspalt zwischen den beiden Konzentratorelementen der Kollektoren ausgebildet ist.

Bevorzugt wird an der Stelle bzw. im Bereich dieses zumindest einen Trenngrats die erste Lauffläche abgeflacht bzw. zurückgesetzt bzw. weist eine Ausnehmung auf, so dass die Klammer, insbesondere mit deren Abtastfläche, den Trenngrat beim Abfahren der Lauffläche nicht berührt.

Die zweite Lauffläche ist zweckmäßigerweise als zur ersten Lauffläche, die insbesondere auf einer Zylindermantelfläche ausgebildet ist, im Wesentlichen senkrecht stehende Stützfläche ausgebildet, die ebenfalls wenigstens Grat aufweist, und deshalb in diesem Bereich ebenfalls eine Ausnehmung aufweist. Die Klammer fährt also insbesondere eine Mantelfläche und eine seitliche Stützfläche als erste und zweite Lauffläche ab und stützt den Kollektor gegenüber dem Stator in zwei Richtungen ab bzw. bietet eine entsprechende Führung.

Bezüglich der axialen Richtung der Welle des Drehmomentsensors ist die wenigstens eine Ausnehmung auf der ersten Lauffläche und/oder auf der zweiten und/oder dritten Lauffläche bevorzugt schräg ausgebildet. Dabei weist di Ausnehmung besonders bevorzugt eine im Wesentlichen rechteckige oder trapezförmige Grundfläche auf, deren Mittellinie nicht senkrecht, also schräg, bezüglich der Richtung entlang der Lauffläche ausgebildet ist.

Der Drehmomentsensor ist bevorzugt so ausgebildet, dass der Stator zumindest auf seiner ersten Lauffläche einstückig, aber zwei Segmente aufweisend, ausgeführt ist, hinsichtlich seines Herstellungsprozesses per Spritzguss, was zu einer Gratbildung bzw. einem Trenngrat bzw. Spritzgrat (180° versetzt) auf der ersten Lauffläche und damit zu einem spürbaren Übergang führt. Besonders bevorzugt besteht der Stator mit seiner Lauffläche an dieser Stelle aus drei Segmenten (120° versetzt). Die erste Lauffläche wird im Bereich der Gratbildung durch Abflachungen bzw. jeweils eine Ausnehmung zurückgesetzt. Die maximal zulässige Höhe des Trenngrats bzw. Spritzgrats wird über die Tiefe der Ausnehmung bzw. Abflachung im Vergleich zur theoretisch weitergeführten Zylindermantelfläche definiert. Die Abflachungen werden überdeckt, indem die Auflageflächen bzw. Abtastflächen der Klammer (an drei Stellen) größer als die Abflachungen bzw. Ausnehmungen der ersten Lauffläche sind und damit "überfahren" werden.

Die Erfindung betrifft außerdem die Herstellung der Lageranordnung sowie die Verwendung der Lageranordnung in Kraftfahrzeugen, insbesondere in Sensoranordnungen.

Außerdem betrifft die Erfindung eine Drehmomentsensoranordnung.

Es zeigen in beispielhafter, schematischer Darstellung
- Fig. 1: ein erstes Ausführungsbeispiel der Lageranordnung, bei dem ein Abfahren der Klammer des Kollektors bzw. ersten Lagerteils auf der ersten Lauffläche des Stators in einer dreidimensionalen Weise dargestellt ist,
- Fig. 2: zeigt eine Klammer über der ersten Lauffläche aus einer Seitenansicht,
- Fig. 3: ein zweites Lagerteil mit seiner ersten Lauffläche resultierend aus der Formung durch ein zweiteiliges Spritzgusswerkzeug,
- Fig. 4: ein zweites Lagerteil resultierend aus einem dreiteiligen Spritzgusswerkzeug, sowie
- Fig. 5: ein zweites Ausführungsbeispiel des zweiten Lagerteils als Stator einer Drehmomentsensoranordnung, wobei drei Laufflächen in einer Nut ausgebildet sind.

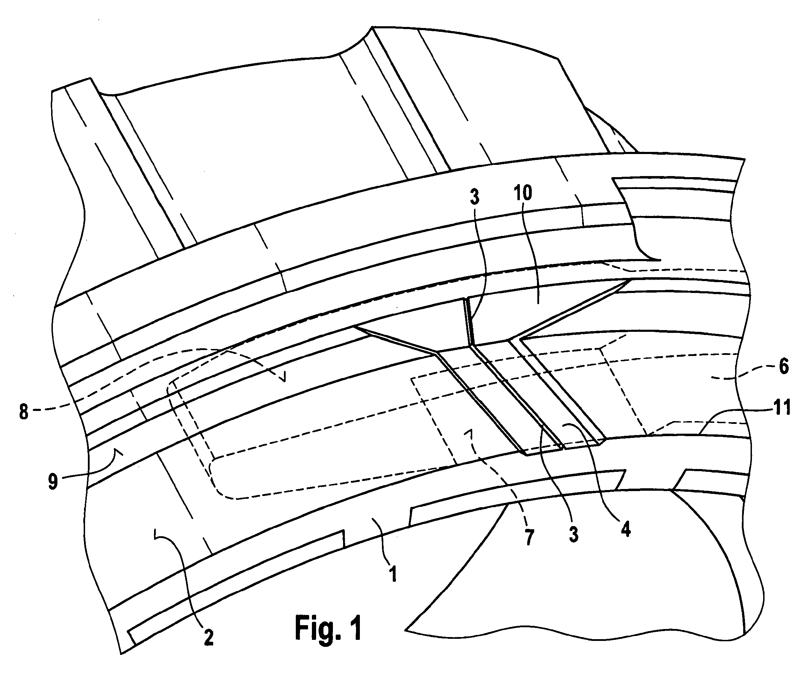

In Fig. 1 ist Stator 1 mit seiner ersten Lauffläche 2 dargestellt, die innerhalb des sichtbaren Ausschnitts einen Spritzgrat bzw. Trenngrat 3 aufweist. Im Bereich dieses Spritzgrats 3 ist eine Ausnehmung 4 auf der ersten Lauffläche 2 ausgebildet, über die Spritzgrat 3 nicht hinausragt. Klammer 6 mit ihrer Abtastfläche 7 fährt die erste Lauffläche 2 berührend ab. Gleichzeit fährt sie mit einer zweiten, seitlichen Abtastfläche 8 beispielgemäß auch eine seitliche Stützfläche 9, als zweite Lauffläche ab, welche ebenfalls den Spritzgrat 3 aufweist. In zweite Lauffläche 9 ist ebenfalls eine Ausnehmung 10 eingelassen, in welcher Spritzgrat 3 angeordnet ist.

Die Ausnehmungen 4 und 10 sind leicht schräg zur ersten Lauffläche 2 und zur zweiten Lauffläche 9 ausgebildet. Die Abtastfläche 7 und die seitliche Abtastfläche 8 sind in Richtung entlang der Laufflächen 2 und 9 länger als die zugeordnete Ausnehmung 4 bzw. 10 ausgebildet, bezüglich der umlaufenden Linie 11, als Kreisbogen um die Mantelfläche. Deshalb taucht Klammer 6 mit ihren Abtastflächen 7 und 8 nicht in die Ausnehmungen 4 und 10 ein, wodurch die Relativbewegung zwischen Stator 2 und Klammer 6, als zweitem und erstem Lagerteil, weder durch den Grat noch die Ausnehmungen wesentlich beeinflusst wird.

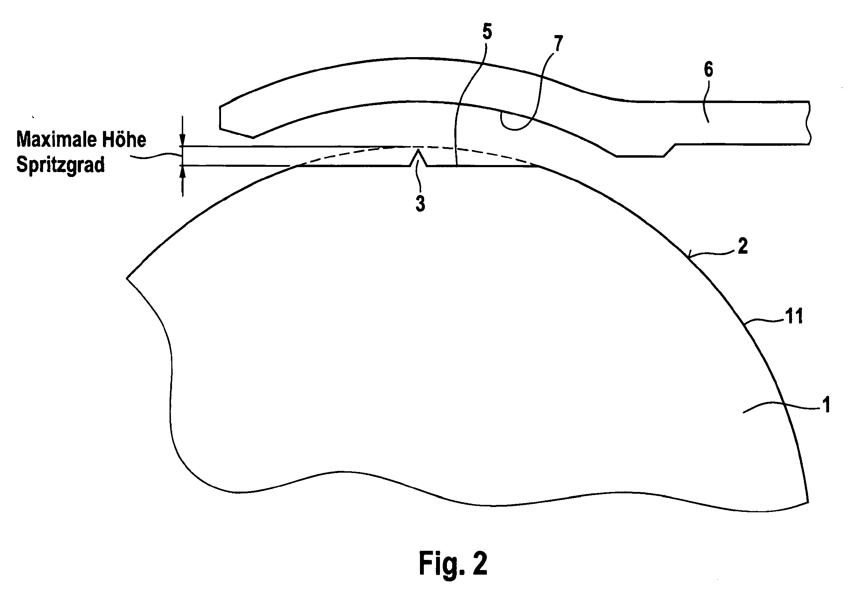

In Fig. 2 ist eine Anordnung von Stator 1, als zweitem Lagerteil und Klammer 6 des Kollektors, als erstem Lagerteil, aus einer Seitenansicht dargestellt. Dabei ist Klammer 6 zur besseren Veranschaulichung durch einen Luftspalt getrennt von Stator 1 dargestellt, was aber nicht der eigentlichen Anordnung entspricht, in welcher Klammer 6 mit Abtastfläche 7 auf erster Lauffläche 2 des Stators aufliegt und sich abstützt. Grat 3 ist in Abflachung 5 der ersten Lauffläche 2 angeordnet. Dabei ist diese Lauffläche 2 eine Mantelfläche eines zylinderförmigen Teils bzw. Segments des Stators 1. Die Abflachung 5 ist dabei so weit vom theoretischen Verlauf der idealen Kreislinie 11, welche Klammer 6 abfährt zurückgesetzt, das Grat 3 darin verschwindet. Grat 3 weist also eine geringere Höhe auf, als die maximale Höhe, die sich aus der Bodenfläche der Abflachung zum theoretischen Verlauf der idealen Kreislinie 11 ergibt. Dieser Abstand ist natürlich von der Position innerhalb der Abflachung abhängig. Die Ausbildung des Spritzgusswerkzeugs ist beispielgemäß so gewählt, dass die Grenze zwischen den Werkzeugteilen, an welchen sich der Grat ausbildet, im Wesentlichen in der Mitte oder in einem mittleren Bereich der Ausnehmung bzw. Abflachung befindet, die wiederum durch die die Werkzeugteile des Spritzgusswerkzeugs ausgebildet bzw. ausgeformt werden.

Der zweite Lagerteil bzw. Stator 1 ist also in den angeführten Beispielen stets so ausgebildet, dass der Grat im Wesentlichen in der Mitte oder in einem mittleren Bereich der Ausnehmung bzw. Abflachung befindet.

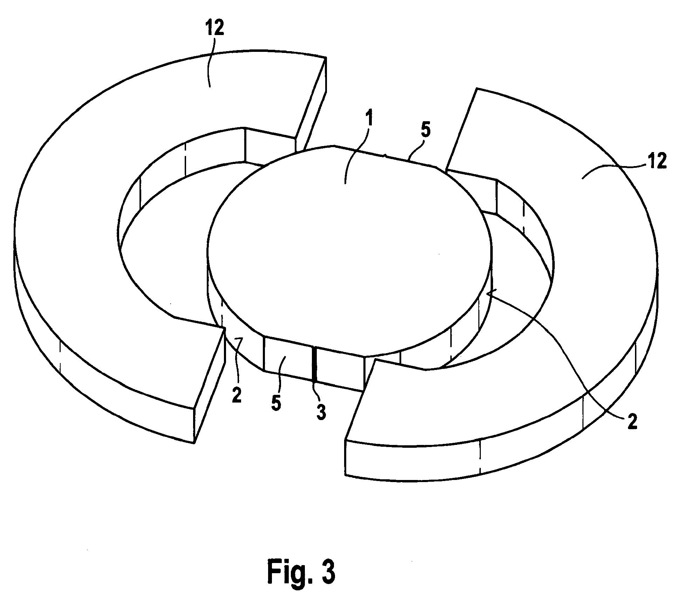

Anhand der Fig. 3 ist die Ausformung eines Stators 1 mittels eines zweigeteilten Spritzgusswerkzeugs 12 veranschaulicht. Auf der ersten Lauffläche 2 sind an den Grenzen der Werkzeugteilhälften jeweils Abflachungen 5 als Ausnehmungen ausgebildet, in deren mittlerem Bereich sich jeweils Grat 3, als Spritzgrad, befindet bzw. ausgebildet ist. So kann nur eine nichtdargestellte Klammer als abstützendes Element die erste Lauffläche 2 abfahren, also von dieser Lauffläche geführt und abgestützt werden, ohne Beeinflussung durch den Grad 3 oder Abflachungen 5, sofern die Länge ihrer Abtastfläche, die in diesem Fall, wie auch in den meisten Beispielen gekrümmt ausgebildet ist, länger ist, als die Länge der Abflachung entlang der Lauffläche 2.

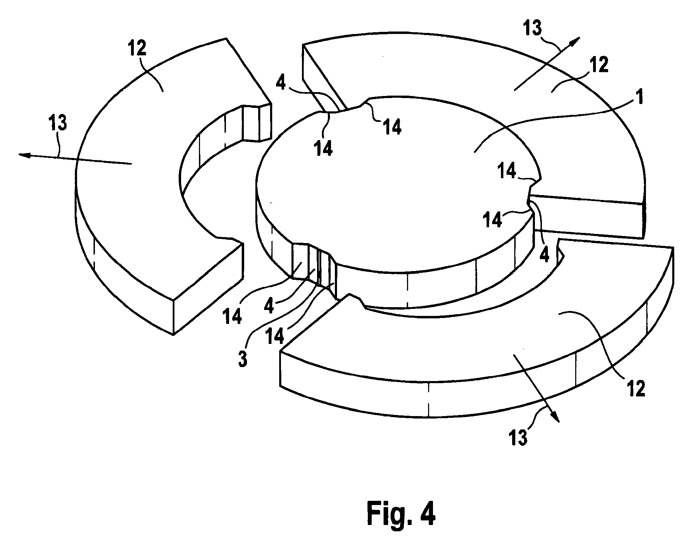

Fig. 4 zeigt einen Stator 1, hergestellt mit einem dreigeteilten Spritzgusswerkzeug 12. An den Grenzen der drei Werkzeugteile ist jeweils eine Ausnehmung 4 ausgebildet, welche nicht nur eine Abflachung umfasst, sondern auch eine Art schräge Einkerbung 14 bzw. schräge Einkerbungsteilfläche 14, beidseitig als Randfläche der Ausnehmung 4 in Richtung entlang der Lauffläche 2. Diese Einkerbungsteilflächen 14, durch die Spritzgusswerkzeugteile 12 ausgeformt, sind beispielgemäß jeweils senkrecht zur Öffnungsrichtung 13 der jeweiligen Werkzeugteile 12 ausgebildet, also die Flächennormale der jeweiligen Einkerbungsteilfläche 14 ist im Wesentlichen parallel zur Öffnungsrichtung 13 des zugeordneten Werkzeugteils 12. In der Mitte der Ausnehmungen 4 ist jeweils Grat bzw. Spritzgrat 3 angeordnet.

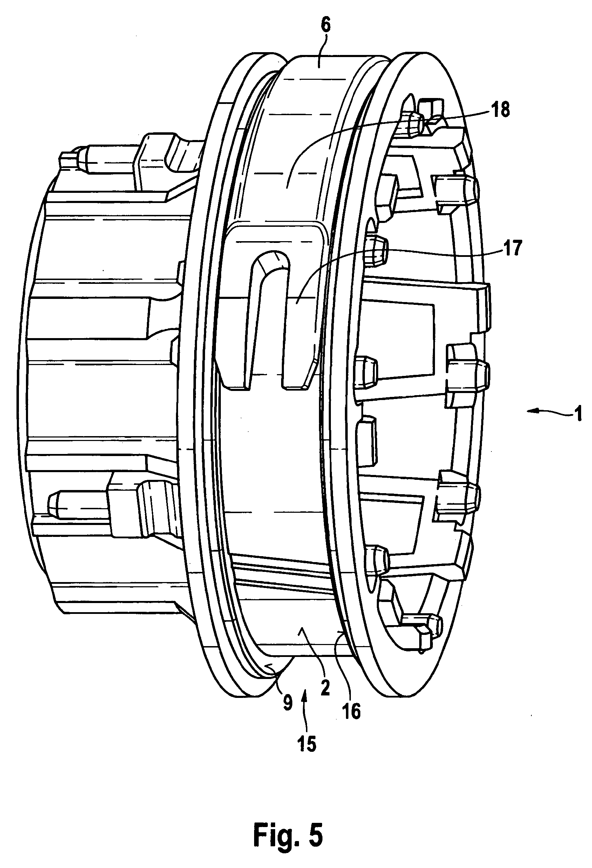

Anhand der Fig. 5 ist Stator 1 eines Drehmomentsensors als zweites Lagerteil dargestellt, der auf seiner Außenfläche eine Nut 15 aufweist. Diese Nut umfasst eine Grund- bzw. Bodenfläche als erste Lauffläche 2 sowie zwei Seitenflächen als zweite Lauffläche 9 und dritte Lauffläche 16. An diesen drei Laufflächen ist Klammer 6 abgestützt und geführt, wobei dazu jeder Lauffläche eine Abtastfläche zugeordnet ist und Klammer 6 in Richtung der Flächennormalen der zweiten und dritten Laufflächen 9 und 16 elastisch ausgebildet ist durch Federelement 17. Im Bereich von Federelement 17 weist Klammer 6 alle drei Abtastflächen auf. Federelement 17 ist in Nut 15 eingepresst wodurch die Führung und Abstützung an allen drei Laufflächen 2, 9 und 16 ermöglicht wird. Klammer 6 umfasst zwei Arme 18, von denen nur einer dargestellt ist, der andere befindet sich auf der anderen Seite der Klammer 6. Am Ende der beiden Arme 18 ist jeweils Federelement 17 ausgebildet, was die drei Abtastflächen aufweist.

## Patentansprüche

1. Lageranordnung, insbesondere für Sensoranordnungen, umfassend ein erstes (6) und ein zweites Lagerteil (1), welche relativ zueinander beweglich ausgebildet und angeordnet sind und sich im Zuge dieser Relativbewegung zumindest teilweise berühren, wobei das erste Lagerteil (6) auf wenigstens einer ersten Lauffläche (2) des zweiten Lagerteils (1) geführt wird, wobei
die erste Lauffläche (2) des zweiten Lagerteils eine Ausnehmung (4, 5) aufweist, in welcher zumindest ein Grat (3) ausgebildet ist, der durch seine Anordnung in der Ausnehmung (4, 5) nicht die Relativbewegung zwischen erstem und zweiten Lagerteil beeinflusst,
**dadurch gekennzeichnet, dass** die wenigstens eine Ausnehmung (4, 5) auf der ersten Lauffläche (2) schräg bezüglich der Richtung entlang der ersten Lauffläche (2) ausgebildet ist, wobei die Ausnehmung eine im Wesentlichen rechteckige oder trapezförmige Grundfläche aufweist, deren Mittellinie schräg bezüglich der Richtung entlang der Lauffläche ausgebildet ist und wobei der Grat sich im Wesentlichen auf der Mittellinie der Ausnehmung befindet.

2. Lageranordnung nach Anspruch 1, **dadurch gekennzeichnet, dass** das zweite Lagerteil (1) entlang der ersten Lauffläche (2) zumindest eine zusätzliche zweite Lauffläche (9) aufweist, wobei diese beiden Laufflächen insbesondere nicht parallel zueinander angeordnet sind und wobei das erste Lagerteil durch die erste und die zusätzliche zweite Lauffläche geführt wird und durch diese beiden Laufflächen in unterschiedliche Richtungen abgestützt wird.

3. Lageranordnung nach mindestens einem der Ansprüche 1 bis 2, **dadurch gekennzeichnet, dass** die erste Lauffläche (2) und insbesondere die zweite Lauffläche (9) als Mantelflächen eines rotationssymmetrischen Körpers (1) ausgebildet sind.

4. Lageranordnung nach Anspruch 2 oder 3, **dadurch gekennzeichnet, dass** die zweite Lauffläche (9) ebenfalls wenigstens einen Grat (3) aufweist und deshalb im Be-reich dieses Grats (3) ebenfalls eine Aüsnehmung (10) aufweist.

5. Lageranordnung nach mindestens einem der Ansprüche 2 bis 4, **dadurch gekennzeichnet, dass** das abstützende Element (6) des ersten Lagerteils mit wenigstens einer Abtastfläche (7) wenigstens die erste Lauffläche (2) abfährt und dabei so ausgebildet ist, dass die Länge der Abtastfläche entlang der Richtung der ersten Lauffläche größer ist, als die Länge der Ausnehmung der ersten Lauffläche entlang derselben Richtung, insbesondere dass die Länge der Abtastfläche mehr als 50% länger ist, als die Länge der Ausnehmung jeweils entlang der Richtung der ersten Lauffläche, so dass das abstützende Element (6) des ersten Lagerteils beim Abfahren entlang der ersten Lauffläche (2) nicht in deren Ausnehmung (4, 5) eintaucht.

6. Lageranordnung nach mindestens einem der Ansprüche 1 bis 5, **dadurch gekennzeichnet, dass** wenigstens das zweite Lagerteil (1) als spritzgegossenes Kunststoffteil oder aus Metallguss ausgebildet ist und zumindest entlang der ersten Lauffläche (2) einstückig ausgebildet ist.

7. Lageranordnung nach mindestens einem der Ansprüche 2 bis 6, **dadurch gekennzeichnet, dass** das abstützende Element (6) des ersten Lagerteils als Klammer ausgebildet ist und das zweite Lagerteil wenigstens im Bereich der ersten Lauffläche (2) teilweise umgreift.

8. Drehmomentsensor mit einer Lageranordnung nach mindestens einem der Ansprüche 1 bis 7, dadurch gekennzeich-net, dass das zweite Lagerteil als Statormodul (1) ausgebildet ist und das erste Lagerteil als Kollektor ausgebildet ist.

9. Drehmomentsensor nach Anspruch 8, **dadurch gekennzeichnet, dass** der Drehmomentsensor eine Welle mit zwei Wellenabschnitten, einen magnetischen Encoder und das Statormodul (1) als zweites Lagerteil der Lageranordnung umfasst, wobei der erste und der zweite Wellenabschnitt durch einen Torsionsstab miteinander verbunden sind und das Drehmoment erfasst werden soll, welches an zumindest einen dieser Wellenabschnitte angreift, wobei auf dem ersten Wellenabschnitt der magnetische Encoder angeordnet ist und auf dem zweiten Wellenabschnitt das Statormodul, das dem Encoder zugeordnet ist und diesen zumindest teilweise, berührungslos umschließt und das vom magnetischen Encoder erzeugte Magnetfeld moduliert, wobei das vom Statormodul modulierte Magnetfeld vom Kollektor als erstem Lagerteil der Lageranordnung erfasst und zu wenigstens einen Magnetfeldsensorelement geleitet wird.

10. Drehmomentsensor nach Anspruch 9, **dadurch gekennzeichnet, dass** das Statormodul (1) zwei Statorsegmente aus magnetisch leitfähigem Material umfasst, wobei die Statorsegmente insbesondere jeweils bezüglich des Torsionsstabs axial abragende Finger ausweisen, die abwechselnd ineinandergreifen und das Magnetfeld modulieren und jeweils pro Statorsegment an einem Ring befestigt sind.

11. Drehmomentsensor nach Anspruch 10, **dadurch gekennzeichnet, dass** die beiden Statorsegmente gemeinsam mit Kunststoff umspritzt sind oder in einem gemeinsamen Kunststoffträger angeordnet sind, wobei diese Umspritzung oder dieser gemeinsame Kunststoffträger auf ihrem/seinem Außengehäuse die erste Lauffläche und insbesondere zusätzlich die zweite Lauffläche aufweist.

12. Drehmomentsensor nach mindestens einem der Ansprüche 8 bis 11, **dadurch gekennzeichnet, dass** der Kollektor oder die gemeinsame Umspritzung des Kollektors und eines Sensormoduls eine Klammer (6) umfasst/umfassen, welche so ausgebildet ist, dass sie zur formschlüssigen Positionierung und/oder Fixierung am Außenumfang der ersten und/oder zweiten Lauffläche des Statormoduls ausgebildet ist und dafür mindestens zwei abragende Arme (18) umfasst.

13. Verwendung des Drehmomentsensors nach mindestens einem der Ansprüche 8 bis 12 in Sensoranordnungen, insbesondere in Sensoranordnungen von Kraftfahrzeugen.

## Claims

1. Bearing arrangement, in particular for sensor arrangements, comprising a first bearing part (6) and a second bearing part (1), which are designed and arranged so as to be movable relative to one another and which touch one another at least partially in the course of said relative motion, wherein the first bearing part (6) is guided on at least one first running surface (2) of the second bearing part (1), wherein
the first running surface (2) of the second bearing part has a recess (4, 5), in which at least one ridge (3) is formed, the arrangement of which in the recess (4, 5) does not influence the relative motion between the first bearing part and the second bearing part,
**characterized in that** the at least one recess (4, 5) on the first running surface (2) is formed obliquely with respect to the direction along the first running surface (2), wherein the recress has a substantially rectangular or trapezoidal bottom surface, the center line of which is oblique with respect to the direction along the running surface and wherein the ridge is situated substantially on the center line of the recess.

2. Bearing arrangement according to Claim 1, **characterized in that** the second bearing part (1) has at least one additional, second running surface (9) along the first running surface (2), wherein said two running surfaces are, in particular, not arranged parallel to one another and wherein the first bearing part is guided by the first running surface and the additional, second running surface and is supported in different directions by said two running surfaces.

3. Bearing arrangement according to at least one of Claims 1 and 2, **characterized in that** the first running surface (2) and, in particular, the second running surface (9) are designed as circumferential surfaces of a rotationally symmetrical body (1).

4. Bearing arrangement according to Claim 2 or 3, **characterized in that** the second running surface (9) likewise has at least one ridge (3) and therefore likewise has a recess (10) in the region of said ridge (3).

5. Bearing arrangement according to at least one of Claims 2 to 4, **characterized in that** the supporting element (6) of the first bearing part runs along at least the first running surface (2) by means of at least one sensing surface (7) and is designed in such a way that the length of the sensing surface along the direction of the first running surface is greater than the length of the recess of the first running surface along the same direction, in particular that the length of the sensing surface is more than 50% longer than the length of the recess, in each case along the direction of the first running surface, with the result that the supporting element (6) of the first bearing part does not enter the recess (4, 5) in the first running surface (2) as it travels along the latter.

6. Bearing arrangement according to at least one of Claims 1 to 5, **characterized in that** at least the second bearing part (1) is designed as an injection molded plastic part or as a metal casting and is of integral design, at least along the first running surface (2).

7. Bearing arrangement according to at least one of Claims 2 to 6, **characterized in that** the supporting element (6) of the first bearing part is designed as a clamp and reaches partially around the second bearing part, at least in the region of the first running surface (2).

8. Torque sensor having a bearing arrangement according to at least one of Claims 1 to 7, **characterized in that** the second bearing part is designed as a stator module (1) and the first bearing part is designed as a collector.

9. Torque sensor (1) according to Claim 8, **characterized in that** the torque sensor comprises a shaft having two shaft sections, a magnetic encoder and the stator module (1) as a second bearing part of the bearing arrangement, wherein the first shaft section and the second shaft section are connected to one another by a torsion bar and the aim is to detect the torque acting on at least one of said shaft sections, wherein the magnetic encoder is arranged on the first shaft section and the stator module, which is associated with the encoder and reaches at least partially around the latter in a contactless manner and modulates the magnetic field produced by the magnetic encoder, is arranged on the second shaft section, wherein the magnetic field modulated by the stator module is detected by the collector as the first bearing part of the bearing arrangement and is passed to at least one magnetic field sensor element.

10. Torque sensor according to Claim 9, **characterized in that** the stator module (1) comprises two stator segments of magnetically conductive material, wherein the stator segments have, in particular, fingers which each project axially relative to the torsion bar, engage alternately in one another and modulate the magnetic field and are each secured on a ring for each stator segment.

11. Torque sensor according to Claim 10, **characterized in that** the two stator segments are jointly overmolded with plastic or are arranged in a common plastic carrier, wherein said overmolding or said common plastic carrier has, on the outer casing thereof, the first running surface and, in particular, the second running surface in addition.

12. Torque sensor according to at least one of Claims 8 to 11, **characterized in that** the collector or the common overmolding of the collector and of a sensor module comprises/comprise a clamp (6), which is designed in such a way that it is designed for positive positioning and/or fixing on the outer circumference of the first and/or of the second running surface of the stator module and, for this purpose, comprises at least two projecting arms (18).

13. Use of the torque sensor according to at least one of Claims 8 to 12 in sensor arrangements, in particular in motor vehicle sensor arrangements.

## Revendications

1. Ensemble palier, en particulier pour agencements détecteurs, comprenant une première (6) et une seconde parties de palier (1), qui sont configurées et disposées mobiles l'une par rapport à l'autre, et qui sont au moins partiellement en contact au cours dudit déplacement relatif, dans lequel la première partie de palier (6) est guidée sur au moins une première surface de roulement (2) de la seconde partie de palier (1), dans lequel
la première surface de roulement (2) de la seconde partie de palier présente un évidement (4, 5) dans lequel est configurée au moins une arête (3) qui, par son agencement dans l'évidement (4, 5), n'influence pas le déplacement relatif entre les première et seconde parties de palier,
**caractérisé en ce que** l'au moins un évidement (4, 5) est réalisé sur la première surface de roulement (2) en biais par rapport à la direction orientée le long de la première surface de roulement (2), dans lequel l'évidement présente une surface de base sensiblement rectangulaire ou trapézoïdale dont la ligne médiane est configurée en biais par rapport à la direction orientée le long de la surface de roulement et dans lequel l'arête se trouve sensiblement sur la ligne médiane de l'évidement.

2. Ensemble palier selon la revendication 1, **caractérisé en ce que** la seconde partie de palier (1) présente le long de la première surface de roulement (2) au moins une seconde surface de roulement supplémentaire (9), dans lequel lesdites deux surfaces de roulement sont notamment disposées de manière non parallèle l'une par rapport à l'autre, et dans lequel la première partie de palier est guidée par la première surface de roulement et par la seconde surface de roulement supplémentaire et est supportée par lesdites deux surfaces de roulement dans des directions différentes.

3. Ensemble palier selon au moins l'une des revendications 1 à 2, **caractérisé en ce que** la première surface de roulement (2) et plus particulièrement, la seconde surface de roulement (9) sont configurées sous la forme de surfaces d'enveloppe d'un corps symétrique de rotation (1).

4. Ensemble palier selon la revendication 2 ou 3, **caractérisé en ce que** la seconde surface de roulement (9) présente également au moins une arête (3) et par conséquent présente également dans la région de ladite arête (3) un évidement (10).

5. Ensemble palier selon au moins l'une des revendications 2 à 4, **caractérisé en ce que** l'élément de support (6) de la première partie de palier parcourt au moins la première surface de palier (2) avec au moins une surface de balayage (7) et est par conséquent configuré de manière à ce que la longueur de la surface de balayage, le long de la direction de la première surface de roulement, soit supérieure à la longueur de l'évidement de la première surface de roulement le long de la même direction, et plus particulièrement, **en ce que** la longueur de la surface de roulement est supérieure à 50 % de la longueur de l'évidement, respectivement le long de la direction de la première surface de roulement, de manière à ce que l'élément de support (6) de la première partie de palier, lors du parcours le long de la première surface de roulement (2), ne pénètre pas dans l'évidement (4, 5) de cette dernière.

6. Ensemble palier selon au moins l'une des revendications 1 à 5, **caractérisé en ce qu'**au moins la deuxième partie de palier (1) est configurée sous la forme d'une partie en matière plastique moulée par injection ou constituée de métal coulé et est configurée d'un seul tenant au moins le long de la première surface de roulement (2).

7. Ensemble palier selon au moins l'une des revendications 2 à 6, **caractérisé en ce que** l'élément de support (6) de la première partie de palier est configuré sous la forme d'une bride et entoure partiellement la seconde partie de palier au moins dans la région de la première surface de roulement (2).

8. Capteur de couple de rotation comportant un ensemble palier selon au moins l'une des revendications 1 à 7, **caractérisé en ce que** la seconde partie de palier est configurée sous la forme d'un module de stator (1) et **en ce que** la première partie de palier est configurée sous la forme d'un collecteur.

9. Capteur de couple de rotation selon la revendication 8, **caractérisé en ce que** le capteur de couple de rotation comprend un arbre ayant deux sections d'arbre, un codeur magnétique et le module de stator (1) en tant que seconde partie de palier de l'ensemble palier, dans lequel les première et seconde sections d'arbre sont reliées l'une à l'autre par l'intermédiaire d'une barre de torsion et **en ce qu'**on doit détecter le couple de torsion qui agit au moins sur l'une desdites sections d'arbre, dans lequel le codeur magnétique est disposé sur la première section d'arbre et le module de stator qui est associé au codeur et enserre ce dernier au moins partiellement sans contact et module le champ magnétique généré par le codeur magnétique, est disposé sur la seconde section d'arbre, dans lequel le champ magnétique modulé par le module de stator est détecté par le collecteur jouant le rôle de première partie de palier de l'ensemble palier et est guidé vers au moins un élément capteur de champ magnétique.

10. Capteur de couple de rotation selon la revendication 9, **caractérisé en ce que** le module de stator (1) comprend deux segments de stator constitués d'un matériau magnétiquement conducteur, dans lequel les segments de stator présentent respectivement des doigts respectifs faisant saillie axialement par rapport à la barre de torsion, lesquels doigts s'imbriquent de manière alternée les uns dans les autres et modulent le champ magnétique et sont respectivement fixés à une bague pour chaque segment de stator.

11. Capteur de couple de rotation selon la revendication 10, **caractérisé en ce que** les deux segments de stator sont encapsulés en commun dans de la matière plastique ou sont disposés dans un support en matière plastique commun, dans lequel ladite encapsulation ou ledit support de matière plastique commun présente sur son boîtier extérieur la première surface de roulement et notamment en outre la seconde surface de roulement.

12. Capteur de couple de rotation selon au moins l'une des revendications 8 à 11, **caractérisé en ce que** le collecteur ou l'encapsulation commune du collecteur et d'un module de capteur comprend/comprennent une bride (6) qui est conçue pour être configurée pour le positionnement et/ou la fixation par complémentarité de forme à la périphérie extérieure de la première et/ou seconde surfaces de roulement du module de stator et comprend à cet effet au moins deux bras faisant saillie (18).

13. Utilisation du capteur de couple de rotation selon au moins l'une des revendications 8 à 12 dans des ensembles capteurs, notamment dans des ensembles capteurs de véhicules automobiles.
